# EUROPEAN PATENT APPLICATION

(11) **EP 4 811 925 A1**
(43) Date of publication of application: **23.09.2026**
(21) Application number: 23958551.6
(22) Date of filing: 15.11.2023
(51) Int. Cl.: H04W 76/14

(54) **COMMUNICATION METHODS, STATION DEVICES AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/131846
(87) International publication number: WO 2025/102270

(57) **Abstract**

Embodiments of the present disclosure relate to communication methods, station devices, and a communication system. A communication method is applied to a first station device, and comprises: determining a tunneled direct link setup request (TDLS Setup Request) frame, the TDLS Setup Request frame comprising first identification information, the first identification information identifying support capability information of the first station device for a peer-to-peer transmission opportunity sharing (P2P TXS) mode, and the support capability information comprising: whether the first station device supports the P2P transmission opportunity sharing (TXS) mode, and at least one of types of the P2P TXS mode supported by the first station device; and sending the TDLS Setup Request frame. The methods provided in the embodiments of the present disclosure can effectively handle burst low-latency services, and further improve low-latency transmission mechanisms to reduce the transmission latency of low-latency communication services.

## Description

### TECHNICAL FIELD

The present disclosure relates to the field of communication technologies, and in particular to a communication method, a station and a communication system.

### BACKGROUND

At present, research on Wi-Fi technologies includes, for example, Ultra High Reliability (UHR), with the vision of improving the reliability of Wireless Local Area Networks (WLAN) connectivity, reducing latencies, increasing manageability, increasing throughput at different Signal to Noise Ratio (SNR) levels and reducing device level power consumption.

In UHR, the low-latency service transmission mechanism will be further enhanced and will support multi-connectivity scenarios. To increase throughput at different Signal to Noise Ratio (SNR) levels, the Transmission Opportunity (TXOP) sharing mode may be adopted in the UHR. Therefore, the TXOP sharing mechanism needs to be further improved to meet the transmission requirements of UHR.

### SUMMARY

Embodiments of the present disclosure provide a communication method, a station, and a communication system to further improve the TXOP sharing mechanism to meet the transmission requirements of UHR.

In an aspect, embodiments of the present disclosure provide a communication method, which is applied to a first station and includes:

determining a Tunneled Direct Link Setup (TDLS) Setup Request frame, wherein the TDLS Setup Request frame includes first indication information, the first indication information indicates support capability information of the first station for a Point-to-Point Transmission Opportunity Sharing (P2P TXS) mode, and the support capability information includes at least one of: whether the first station supports the P2P Transmission Opportunity Sharing (TXS) mode or a type of the P2P TXS mode supported by the first station; and
sending the TDLS Setup Request frame.

In another aspect, embodiments of the present disclosure further provide a communication method, which is applied to a second station and includes:
receiving a TDLS Setup Request frame, wherein the TDLS Setup Request frame includes first indication information, the first indication information indicates support capability information of the first station for a P2P TXS mode, and the support capability information includes at least one of: whether the first station supports the P2P Transmission Opportunity Sharing (TXS) mode or a type of the P2P TXS mode supported by the first station;
determining a TDLS Setup Response frame, wherein the TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station; and
sending the TDLS Setup Response frame.

In another aspect, embodiments of the present disclosure further provide a station, which is a first station, and the first station includes:
a first determination module, configured to determine a Tunneled Direct Link Setup (TDLS) Setup Request frame, wherein the TDLS Setup Request frame includes first indication information, the first indication information indicates support capability information of the first station for a Point-to-Point Transmission Opportunity Sharing (P2P TXS) mode, and the support capability information includes at least one of: whether the first station supports the P2P Transmission Opportunity Sharing (TXS) mode or a type of the P2P TXS mode supported by the first station; and
a first sending module, configured to send the TDLS Setup Request frame.

In another aspect, embodiments of the present disclosure further provide a station, which is a second station, and the second station includes:
a first receiving module, configured to receive a TDLS Setup Request frame, wherein the TDLS Setup Request frame includes first indication information, the first indication information indicates support capability information of the first station for a P2P TXS mode, and the support capability information includes at least one of: whether the first station supports the P2P Transmission Opportunity Sharing (TXS) mode or a type of the P2P TXS mode supported by the first station;
a second determination module, configured to determine a TDLS Setup Response frame, wherein the TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station; and
a second sending module, configured to send the TDLS Setup Response frame.

In another aspect, embodiments of the present disclosure further provide a station, wherein the station is a first station, including:
one or more processors;
wherein the first station is configured to perform the communication method described in the embodiments of the present disclosure.

In another aspect, embodiments of the present disclosure further provide a station, wherein the station is a second station, including:
one or more processors;
wherein the second station is configured to perform the communication method described in the embodiments of the present disclosure.

Embodiments of the present disclosure further provide a communication system, including a first station and a second station; wherein the first station is configured to implement the communication method described in the embodiments of the present disclosure, and the second station is configured to implement the communication method described in the embodiments of the present disclosure.

Embodiments of the present disclosure further provide a storage medium storing instructions that, when running on a communication device, cause the communication device to perform the communication method described in the embodiments of the present disclosure.

In the embodiments of the present disclosure, during the establishment of a TDLS link, the TDLS device notifies the peer of its support capability information for the P2P TXS mode through the first indication information. Subsequently, during communication, if the TXOP responder (second station) has a bursty/temporary low-latency communication service, the TXOP holder (first station) supports inter-station transmission opportunity sharing and has the capability to share with other devices. The TXOP responder can send a transmission opportunity sharing request to obtain a transmission opportunity. The method provided in the embodiments of the present disclosure can effectively cope with bursty low-latency services, further improve the low-latency transmission mechanism, and reduce the transmission latency of the low-latency communication service.

Additional aspects and advantages of the embodiments of the present disclosure will be set forth in part in the following description, and will become apparent from the following description or may be learned by practice of the present disclosure.

### BRIEF DESCRIPTION OF THE DRAWINGS

To more clearly illustrate the technical solutions of embodiments of the present disclosure, the drawings needed in the description of the embodiments will be introduced below. The following drawings are only some embodiments of the present disclosure and do not impose specific limitations on the protection scope of the present disclosure.
FIG. 1 is an example schematic diagram of an architecture of a communication system provided in an embodiment of the present disclosure;
FIG. 2 is a first example schematic interactive diagram of a method provided in an embodiment of the present disclosure;
FIG. 3 is a second example schematic interactive diagram of a method provided in an embodiment of the present disclosure;
FIG. 4 is a first schematic flowchart of a communication method provided in an embodiment of the present disclosure;
FIG. 5 is a second schematic flowchart of a communication method provided in an embodiment of the present disclosure;
FIG. 6 is a schematic structural diagram of a first station provided in an embodiment of the present disclosure;
FIG. 7 is a schematic structural diagram of a second station provided in an embodiment of the present disclosure;
FIG. 8 is a schematic structural diagram of a terminal provided in an embodiment of the present disclosure; and
FIG. 9 is a schematic structural diagram of a chip provided in an embodiment of the present disclosure.

### DETAILED DESCRIPTION

Embodiments of the present disclosure provide a communication method, a station and a communication system.

In a first aspect, embodiments of the present disclosure provide a communication method, which includes:
determining a Tunneled Direct Link Setup (TDLS) Setup Request frame, wherein the TDLS Setup Request frame includes first indication information, the first indication information indicates support capability information of the first station for a Point-to-Point Transmission Opportunity Sharing (P2P TXS) mode, and the support capability information includes at least one of: whether the first station supports the P2P Transmission Opportunity Sharing (TXS) mode or a type of the P2P TXS mode supported by the first station; and
sending the TDLS Setup Request frame.

In the above embodiments, during the establishment of a TDLS link, the TDLS device notifies the peer of its support capability information for the P2P TXS mode through the first indication information. Subsequently, during communication, if the TXOP responder (second station) has a bursty/temporary low-latency communication service, the TXOP holder (first station) supports inter-station transmission opportunity sharing and has the capability to share with other devices. The TXOP responder can send a transmission opportunity sharing request to obtain a transmission opportunity.

In combination with some embodiments of the first aspect, in some embodiments, the TDLS Setup Request frame includes an Ultra High Reliability (UHR) Capabilities element; and
the first indication information is carried in a P2P TXOP Sharing Mode Support indication field of the UHR Capabilities element.

In the above embodiments, during the establishment of the TDLS link, the TDLS device notifies the peer of its support capability information for the P2P TXS mode through the first indication information.

In combination with some embodiments of the first aspect, in some embodiments, the method includes at least one of:
setting the first indication information as a first parameter value, indicating that the first station supports a capability of initiating the TXS to a TDLS device and supports a capability of responding to the TXS initiated by another TDLS device;
setting the first indication information as a second parameter value, indicating that the first station supports the capability of initiating the TXS to the TDLS device and does not support the capability of responding to the TXS initiated by another TDLS device;
setting the first indication information as a third parameter value, indicating that the first station does not support the capability of initiating the TXS to the TDLS device and supports the capability of responding to the TXS initiated by another TDLS device; or
setting the first indication information as a fourth parameter value, indicating that the first station does not support the capability of initiating the TXS to the TDLS device and does not support the capability of responding to the TXS initiated by another TDLS device.

In the above embodiments, a specific indication form for the support capability information of the first station for the P2P TXS mode is provided, thereby improving the TXOP sharing mechanism.

In combination with some embodiments of the first aspect, in some embodiments, after sending the TDLS Setup Request frame, the method further includes:
receiving a TDLS Setup Response frame sent by a second station;
wherein the TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station.

In the above embodiments, the first station obtains the support capability information of the second station for the P2P TXS mode through the second indication information in the TDLS Setup Response frame, which is used for later TXS mechanism implementation.

In combination with some embodiments of the first aspect, in some embodiments, after receiving the TDLS Setup Response frame sent by the second station, the method further includes:
sending data to the second station within a first TXOP, wherein the second indication information indicates that the second station does not support a capability of responding to TXS initiated by another TDLS device, or the first indication information indicates that the first station does not support a capability of initiating TXS to a TDLS device;
receiving a first TXOP sharing request sent by the second station, wherein the first TXOP sharing request is used to request the first station to share part of a transmission time within a first TXOP for the second station to perform low-latency service transmission, the second indication information indicates that the second station supports the capability of responding to the TXS initiated by another TDLS device, and the first indication information indicates that the first station supports the capability of initiating the TXS to the TDLS device; or
sending a second TXOP sharing request to the second station, wherein the second TXOP sharing request is used to request the second station to share part of a transmission time within a second TXOP for the first station to perform low-latency service transmission, the first indication information indicates that the first station supports the capability of responding to the TXS initiated by another TDLS device, and the second indication information indicates that the second station supports the capability of initiating the TXS to the TDLS device.

In the above embodiments, the TXOP sharing mechanism is executed according to the specific types of the first indication information and the second indication information to reduce the transmission latency of the low-latency communication service.

In combination with some embodiments of the first aspect, in some embodiments, after receiving the first TXOP sharing request sent by the second station, the method further includes:

in response to the first TXOP sharing request, sending, by the first station, a first Multi User Request-to-Send Transmission Opportunity Sharing (MU-RTS TXS) Trigger frame to the second station, wherein the first MU-RTS TXS Trigger frame includes a User Info field, and the User Info field includes device identity information of the second station.

In the above embodiments, the TXOP sharing is triggered by the MU-RTS TXS Trigger frame.

In combination with some embodiments of the first aspect, in some embodiments, during the transmission time shared by the first station to the second station, the first station sends data only when receiving and responding to a data transmission request from the second station.

In the above embodiments, the behavior of the first station within the transmission time shared by the first station is specified to prevent it from preempting the channel during the transmission time shared with other devices to affect the transmission of low-latency services.

In combination with some embodiments of the first aspect, in some embodiments, after sending the second TXOP sharing request to the second station, the method further includes:
receiving a second MU-RTS TXS Trigger frame sent by the second station, wherein the second MU-RTS TXS Trigger frame includes a User Info field, and the User Info field includes device identity information of the first station.

In the above embodiments, it is determined whether the second station allocates the transmission time to the first station based on whether the User Info field of the second MU-RTS TXS Trigger frame includes the identity information of the first station.

In a second aspect, embodiments of the present disclosure provide a communication method, which is applied to a second station and includes:
receiving a TDLS Setup Request frame, wherein the TDLS Setup Request frame includes first indication information, the first indication information indicates support capability information of the first station for a P2P TXS mode, and the support capability information includes at least one of: whether the first station supports the P2P Transmission Opportunity Sharing (TXS) mode or a type of the P2P TXS mode supported by the first station;
determining a TDLS Setup Response frame, wherein the TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station; and
sending the TDLS Setup Response frame.

In combination with some embodiments of the second aspect, in some embodiments, the TDLS Setup Request frame includes a UHR Capabilities element; and
the second indication information is carried in a P2P TXOP Sharing Mode Support indication field of the UHR Capabilities element.

In combination with some embodiments of the second aspect, in some embodiments, the method includes at least one of:
setting the second indication information as a first parameter value, indicating that the second station supports a capability of initiating TXS to a TDLS device and supports a capability of responding to TXS initiated by another TDLS device;
setting the second indication information as a second parameter value, indicating that the second station supports the capability of initiating the TXS to the TDLS device and does not support the capability of responding to the TXS initiated by another TDLS device;
setting the second indication information as a third parameter value, indicating that the second station does not support the capability of initiating the TXS to the TDLS device and supports the capability of responding to the TXS initiated by another TDLS device; or
setting the second indication information as a fourth parameter value, indicating that the second station does not support the capability of initiating the TXS to the TDLS device and does not support the capability of responding to the TXS initiated by another TDLS device.

In combination with some embodiments of the second aspect, in some embodiments, after receiving the TDLS Setup Request frame, the method further includes:
keeping a receiving state within a first TXOP, and receiving data sent by the first station, wherein the second indication information indicates that the second station does not support a capability of responding to TXS initiated by another TDLS device, or the first indication information indicates that the first station does not support a capability of initiating TXS to a TDLS device;
sending a TXOP sharing request to the first station, wherein the TXOP sharing request is used to request the first station to share part of a transmission time within a first TXOP for the second station to perform low-latency service transmission, the second indication information indicates that the second station supports the capability of responding to the TXS initiated by another TDLS device, and the first indication information indicates that the first station supports the capability of initiating the TXS to the TDLS device; or
receiving a second TXOP sharing request sent by the first station, wherein the second TXOP sharing request is used to request the second station to share part of a transmission time within a second TXOP for the first station to perform low-latency service transmission, the first indication information indicates that the first station supports the capability of responding to the TXS initiated by another TDLS device, and the second indication information indicates that the second station supports the capability of initiating the TXS to the TDLS device.

In combination with some embodiments of the second aspect, in some embodiments, after sending the TXOP sharing request to the first station, the method further includes:
receiving a first MU-RTS TXS Trigger frame sent by the first station to the second station, wherein the first MU-RTS TXS Trigger frame includes a User Info field.

In combination with some embodiments of the second aspect, in some embodiments, the User Info field includes device identity information of the second station, and a low-latency service is transmitted within a transmission time indicated by the MU-RTS TXS Trigger frame; or
the User Info field does not include the device identity information of the second station, a receiving state is kept within the first TXOP and data sent by the first station is received.

In combination with some embodiments of the second aspect, in some embodiments, after receiving the second TXOP sharing request sent by the first station, the method further includes:
in response to the second TXOP sharing request, sending a second MU-RTS TXS Trigger frame to the first station, wherein the second MU-RTS TXS Trigger frame includes a User Info field, and the User Info field includes device identity information of the first station.

In combination with some embodiments of the second aspect, in some embodiments, during a transmission time shared by the second station to the first station, the second station sends data only when receiving and responding to a data transmission request from the first station.

In a third aspect, embodiments of the present disclosure further provide a station, which is a first station, and the first station includes at least one of a determination module or a sending module; wherein the first station is configured to perform implementations of the first aspect.

In a fourth aspect, embodiments of the present disclosure further provide a station, which is a second station, and the second station includes a first receiving module; wherein the second station is configured to perform implementations of the second aspect.

In a fifth aspect, embodiments of the present disclosure further provide a station, which is a first station, including:
one or more processors;
wherein the first station is configured to perform implementations of the first aspect.

In a sixth aspect, embodiments of the present disclosure further provide a station, which is a second station, including:
one or more processors;
wherein the second station is configured to perform implementations of the second aspect.

In a seventh aspect, embodiments of the present disclosure further provide a communication system, including a first station and a second station; wherein the first station is configured to perform implementations described in the first aspect, and the second station is configured to perform implementations described in the second aspect.

In an eighth aspect, embodiments of the present disclosure further provide a storage medium storing instructions that, when running on a communication device, cause the communication device to perform implementations described in the first and second aspects.

In a ninth aspect, embodiments of the present disclosure provide a program product that, when executed by a communication device, causes the communication device to perform the method described in implementations of the first and second aspects.

In a tenth aspect, embodiments of the present disclosure provide a computer program that, when running on a computer, causes the computer to perform the method described in implementations of the first and second aspects.

In an eleventh aspect, embodiments of the present disclosure provide a chip or chip system. The chip or chip system includes a processing circuit configured to perform the method described in implementations of the first and second aspects.

It can be understood that the first and second stations, communication systems, storage media, program products, computer programs, chips, or chip systems are all used to execute the methods proposed in the embodiments of the present disclosure. Therefore, the beneficial effects they may achieve may be referred to in the corresponding methods, and will not be elaborated upon here.

Embodiments of the present disclosure provide a communication method, a station, and a communication system. In some embodiments, terms such as communication method and signal sending method and wireless frame sending method may be used interchangeably, and terms like information processing system and communication system may be used interchangeably.

The embodiments of the present disclosure are not exhaustive, but merely illustrate a part of the embodiments and do not constitute specific limitations on the scope of protection of the present disclosure. In the absence of contradiction, each step in a certain embodiment can be implemented as an independent embodiment, and the steps may be arbitrarily combined. For example, a solution with a part of steps removed from a certain embodiment may also be implemented as an independent embodiment, and the order of the steps in a certain embodiment may be arbitrarily exchanged. In addition, the implementations in a certain embodiment may be arbitrarily combined. Additionally, the various embodiments may be arbitrarily combined. For example, a part of or all of the steps of different embodiments may be arbitrarily combined, and a certain embodiment may be arbitrarily combined with the implementations of other embodiments.

In various embodiments of the present disclosure, unless otherwise specified or logically conflicting, the terms and/or descriptions among the embodiments are consistent and may be mutually referenced. Technical features in different embodiments may be combined based on their inherent logical relationships to form new embodiments.

The terms used in the embodiments of the present disclosure are for the purpose of describing specific embodiments only, and are not intended to limit the present disclosure.

In the embodiments of the present disclosure, "a plurality of" refers to two or more.

In some embodiments, terms such as "at least one of", "one or more", "a plurality of", and "multiple" may be interchangeable.

In some embodiments, the reciting manners such as "at least one of A and B", "A and/or B", "in one situation A, in another situation B", "in response to one situation A, in response to another situation B" can include the following technical solutions depending on the situation: in some embodiments, A (executing A independently of B); in some embodiments, B (executing B independently of A); in some embodiments, selectively executing A or B (executing A and B selectively); and in some embodiments, A and B (executing both A and B). When there are more branches such as A, B, C, etc., the solution is similar to the above.

In some embodiments, the reciting manners such as "A or B" can include the following technical solutions depending on the situation: in some embodiments, A (executing A independently of B); in some embodiments, B (executing B independently of A); in some embodiments, selectively executing A or B (executing A and B are selectively). When there are more branches such as A, B, C, etc., the solution is similar to the above.

The prefix words such as "first" and "second" in the embodiments of the present disclosure are only used to distinguish different described objects, and do not limit the position, order, priority, number, or content, etc. of the described objects. The description of the described objects may refer to the description in the claims or the context of the embodiments, and should not constitute unnecessary limitations due to the use of the prefix words. For example, if the described object is a "field", then the ordinal number before the "field" in the "first field" and the "second field" does not limit the position or order between the "fields", and "first" and "second" do not limit whether the "fields" they modify are in the same message, nor do they limit the sequential order of the "first field" and the "second field". For another example, if the described object is a "level", then the ordinal number before the "level" in the "first level" and the "second level" does not limit the priority between the "levels". For another example, the number of the described objects is not limited by the ordinal number, and may be one or more. Taking the "first device" as an example, the number of "devices" may be one or more. Furthermore, the objects modified by different prefix words may be the same or different. For example, if the described object is a "device", then the "first device" and the "second device" may be the same device or different devices, and may be of the same type or different types. For another example, if the described object is "information", then the "first information" and the "second information" may be the same information or different information, and may be information of the same content or information of different contents.

In some embodiments, "comprising A", "including A", "used for indicating A", and "carrying A" may be interpreted as directly carrying A, or may be interpreted as indirectly indicating A.

In some embodiments, terms such as "in response to...", "in response to determining...", "in the case of...", "when...", "at the time of...", "if...", "assuming...", etc. may be interchangeable.

In some embodiments, terms such as "greater than", "greater than or equal to", "not less than", "more than", "more than or equal to", "not smaller than", "higher than", "higher than or equal to", "not lower than", "above", etc. may be interchangeable. Terms such as "less than", "less than or equal to", "not greater than", "smaller than" "smaller than or equal to", "not more than", "lower than", "lower than or equal to", "not higher than", "below", etc. may be interchangeable.

In some embodiments, the apparatus and device can be interpreted as physical or virtual, and their names are not limited to the names recorded in the embodiments. In some cases, they can also be understood as "equipment", "device", "circuit", "network element", "node", "function", "unit", "section", "system", "network", "chip", "chip system", "entity", "body", etc.

In some embodiments, obtaining data, information, etc. may comply with the laws and regulations of the country where it is located.

In some embodiments, data, information, etc. may be obtained after the user consent is obtained.

In addition, each element, each row, or each column in the table of the embodiments of the present disclosure can be implemented as an independent embodiment, and the combination of any element, any row, or any column may also be implemented as an independent embodiment.

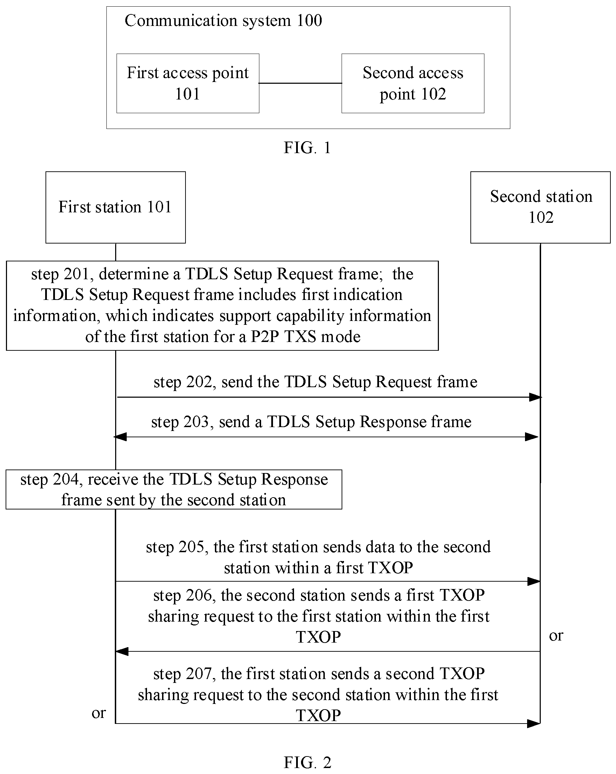

FIG. 1 shows a schematic diagram of an architecture of a communication system according to an embodiment of the present disclosure.

As shown in FIG. 1, the communication system 100 includes a Station (STA) 101 and an Access Point (AP) 102.

In some embodiments, the station 101 includes, for example, a wireless communication chip supporting the WiFi communication function, a wireless sensor, or a wireless communication terminal. In some embodiments, the wireless communication terminal may be at least one of, but not limited to, a mobile phone, a wearable device, an IoT device supporting the WiFi communication function, a car with the WiFi communication function, a smart car, a pad, a computer with the wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home.

Specifically, the station 101 can be a terminal device or network device with a Wi-Fi chip. In some embodiments, the station 101 can support multiple WLAN standards such as 802.11ax, 802.11be, 802.11ac, 802.11n, 802.11g, 802.11b, 802.11a, 802.11bf, and 802.11bn, as well as the next-generation 802.11 protocol, which are not limited thereto.

In some embodiments, access point 102 can be an access point for mobile terminals to access a wired network. An AP acts as a bridge connecting wired and wireless networks, its main function being to connect various wireless network clients together and then connect the wireless network to an Ethernet network. Specifically, an AP can be a terminal device or network device with a Wi-Fi chip. In some embodiments, the AP can support various WLAN standards such as 802.11ax, 802.11be, 802.11ac, 802.11n, 802.11g, 802.11b, 802.11a, 802.11bf, and 802.11bn, as well as the next-generation 802.11 protocol, but is not limited to these.

Fo example, in embodiments of the present disclosure, the AP and the STA can be devices that support multiple links. For example, the AP and the STA can be represented as Access Point Multi-Link Device (AP MLD) and Non-Access Point Multi-Link Device (Non-AP MLD), respectively. The AP MLD can represent an access point that supports multiple link communication functions, and the non-AP MLD can represent a station that supports multiple link communication functions.

It should be understood that the communication system described in the embodiments of the present disclosure is for a clearer explanation of the technical solution of the embodiments of the present disclosure, but does not constitute a limitation on the technical solution proposed in the embodiments of the present disclosure. Those ordinary skilled in the art know that with the evolution of the system architecture and the emergence of new service scenarios, the technical solution proposed in the embodiments of the present disclosure is also applicable to similar technical problems.

The embodiments of the present disclosure described below may be applied to the communication system 100 shown in FIG. 1, or a part of the subjects in the communication system 100, but are not limited thereto. The subjects shown in FIG. 1 are illustrative only. The communication system may include all of or a part of the subjects shown in FIG. 1, or may include subjects other than those shown in FIG. 1. The number and form of each subject are arbitrary, and each subject may be physical or virtual. The connection relationships between the subjects are illustrative. The subjects may not be connected to each other or may be connected to each other. The connection may be in any way, either direct or indirect, wired or wireless.

Various embodiments in the present disclosure can be applied to Wireless Local Area Networks (WLANs), such as LANs using the 802.11 series of protocols. In a WLAN, a Basic Service Set (BSS) is a fundamental component of the WLAN. An BSS network consists of stations with some association within a specific coverage area. An association scenario is that stations communicate directly with each other in the ad hoc network, which is called an Independent Basic Service Set (IBSS). Another more common scenario is that in a BSS network, there is only one central station dedicated to managing the BSS, and the central station is called the access point, and all other STAs in the network are associated with it. Other stations in the BSS network that are not the central station are called terminals, also known as non-AP STAs, and terminals and non-AP STAs are collectively referred to as STAs. When describing STAs, it is not necessary to distinguish between APs and non-AP STAs. Within the same BSS network, due to distance, transmission power, etc., a STA cannot detect other STAs that are far away; they are each other's hidden nodes.

FIG. 2 shows a schematic interactive diagram of a communication method according to an embodiment of the present disclosure. As shown in FIG. 2, the method includes steps 201 to 207.

In the step 201, a first station determines a TDLS Setup Request frame, the TDLS Setup Request frame includes first indication information, the first indication information indicates support capability information of the first station for a P2P TXS mode, and the support capability information includes at least one of: whether the first station supports the P2P Transmission Opportunity Sharing (TXS) mode or a type of the P2P TXS mode supported by the first station.

In WLAN communications, reducing the transmission latency of low-latency communication services is one of the main research objectives. For deterministic or periodic low-latency services, the Restricted-Target Wake Time (R-TWT) mechanism can effectively ensure the timely transmission of low-latency communication services. However, when the AP or the STA faces some temporary or bursty low-latency services, the R-TWT mechanism is no longer applicable. Therefore, in embodiments of the present disclosure, during the establishment of a Tunneled Direct Link Setup (TDLS) link between the first station and the second station, the first station determines the TDLS Setup Request frame and carries the first indication information in the TDLS Setup Request frame. The first indication information indicates the support capability information of the first station for the P2P TXS mode, realizing the interaction of the P2P TXS mode support capability with the TDLS device.

Two TDLS devices establishing the TDLS link can communicate with each other directly through the TDLS link. The P2P TXS mode refers to a point-to-point (P2P) Transmission Opportunity Sharing (TXS) mode. For example, a TXOP holder can trigger a TXS process to allocate part of time within the TXOP it reserves to other devices, which then use the allocated TXOP to promptly send a low-latency service to a receiving device of that service.

The support capability information of the first station for the P2P TXS mode includes at least one of:
whether the first station supports the P2P Transmission Opportunity Sharing (TXS) mode or the type of the P2P TXS mode supported by the first station.

Whether the first station supports the P2P Transmission Opportunity Sharing (TXS) mode means whether the first station supports the P2P TXS mode. The type of the P2P TXS mode supported by the first station includes, for example, the first station supporting actively initiating the P2P TXS mode, or the first station supporting responding to the P2P TXS mode initiated by other devices.

Typically, within a TXOP, only the TXOP holder can actively send data, and other devices can only receive the data or send response frames (e.g., ACK frames) for the received data. Taking the first station as a STA as an example, during the first station, as the TXOP holder, sending the data (uplink data or P2P data) to the second station (an AP that establishes an initial association with the STA, or a STA that establishes a P2P link with the STA), when the second station has temporary/bursty low-latency communication services to transmit to other communication devices, it can use the transmission time allocated to it by the first station through the P2P TXS mode to transmit the temporary/bursty low-latency communication services, thus ensuring the transmission of low-latency services. This avoids the scenario where the second station would otherwise have to wait until the end of the current TXOP held by the first station before it can transmit such services, which would cause high transmission latency.

In the embodiments of the present disclosure, during the establishment of a TDLS link, the TDLS device notifies the peer of its support capability information for the P2P TXS mode through the first indication information. Subsequently, during communication, if the TXOP responder (second station) has a bursty/temporary low-latency communication service, the TXOP holder (first station) supports inter-station transmission opportunity sharing and has the capability to share with other devices. The TXOP responder can send a transmission opportunity sharing request to obtain a transmission opportunity. The method provided in the embodiments of the present disclosure can effectively cope with bursty low-latency services, further improve the low-latency transmission mechanism, and reduce the transmission latency of the low-latency communication service.

In the step 202, the first station sends the TDLS Setup Request frame.

The first station sends the TDLS Setup Request frame, which carries the first indication information to notify the peer of its support capability information for the P2P TXS mode.

In some embodiments, the TDLS Setup Request frame includes a UHR Capabilities element.

The first indication information is carried in a P2P TXOP Sharing Mode Support indication field of the UHR Capabilities element.

The first indication information is included in the UHR Capabilities element.

For example, the first indication information can be carried in the P2P TXOP Sharing Mode Support indication field to identify whether a device sending the TDLS Setup Request frame supports the P2P TXS mode and the type it supports.

In some embodiments, the first indication information includes at least one of the following first to fourth cases.

In the first case, the first indication information is set to a first parameter value, indicating that the first station supports a capability of initiating the TXS to a TDLS device and supports a capability of responding to the TXS initiated by other TDLS devices. For example, when the first parameter value is set to 3, it indicates that the device (first station) that sends the TDLS Setup Request frame has the capability of initiating the TXS to other TDLS devices and the capability of responding to the TXS initiated by other TDLS devices.

In the second case, the first indication information is set to a second parameter value, indicating that the first station supports the capability of initiating the TXS to the TDLS device and does not support the capability of responding to the TXS initiated by other TDLS devices. For example, when the second parameter value is set to 2, it indicates that the device (first station) that sends the TDLS Setup Request frame has the capability of initiating the TXS to other TDLS devices and does not have the capability of responding to the TXS initiated by other TDLS devices.

In the third case, the first indication information is set to a third parameter value, indicating that the first station does not support the capability of initiating the TXS to the TDLS device and supports the capability of responding to the TXS initiated by other TDLS devices. For example, when the third parameter value is set to 1, it indicates that the device (first station) that sends the TDLS Setup Request frame does not have the capability of initiating the TXS to other TDLS devices and has the capability of responding to the TXS initiated by other TDLS devices.

In the fourth case, the first indication information is set to a fourth parameter value, indicating that the first station does not support the capability of initiating the TXS to the TDLS device and does not support the capability of responding to the TXS initiated by other TDLS devices. For example, when the fourth parameter value is set to 0, it indicates that the device (first station) that sends the TDLS Setup Request frame does not have the capability of initiating the TXS to other TDLS devices and does not have the capability of responding to the TXS initiated by other TDLS devices.

In the step 203, the second station sends a TDLS Setup Response frame.

The TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station.

The TDLS Setup Response frame is used to respond to the TDLS Setup Request frame. After receiving the TDLS Setup Request frame sent by the first station, the second station sends the TDLS Setup Response frame to the first station. The TDLS Setup Response frame includes the second indication information to indicate whether the second station supports the P2P TXS mode and the specific type it supports.

For example, the second indication information is in the same form as the second indication information in the TDLS Setup Request frame, and the TDLS Setup Response frame includes a UHR Capabilities element.

The second indication information is carried in a P2P TXOP Sharing Mode Support indication field of the UHR Capabilities element.

The second indication information is included in the UHR Capabilities element.

For example, the second indication information can be carried in the P2P TXOP Sharing Mode Support indication field to indicate whether the device sending the TDLS Setup Response frame supports the P2P TXS mode and the type it supports.

In some embodiments, the second indication information includes at least one of the following fifth to eighth cases.

In the fifth case, the second indication information is set to a first parameter value, indicating that the second station supports a capability of initiating the TXS to a TDLS device and supports a capability of responding to the TXS initiated by other TDLS devices. For example, when the second parameter value is set to 3, it indicates that the device (second station) that sends the TDLS Setup Response frame has the capability of initiating the TXS to other TDLS devices and has the capability of responding to the TXS initiated by other TDLS devices.

In the sixth case, the second indication information is set to a second parameter value, indicating that the second station supports the capability of initiating the TXS to the TDLS device and does not support the capability of responding to the TXS initiated by other TDLS devices. For example, when the second parameter value is set to 2, it indicates that the device (second station) that sends the TDLS Setup Response frame has the capability of initiating the TXS to other TDLS devices and does not have the capability of responding to the TXS initiated by other TDLS devices.

In the seventh case, the second indication information is set to a third parameter value, indicating that the second station does not support the capability of initiating the TXS to the TDLS device and supports the capability of responding to the TXS initiated by other TDLS devices. For example, when the third parameter value is set to 1, it indicates that the device (second station) that sends the TDLS Setup Response frame does not have the capability of initiating the TXS to other TDLS devices and has the capability of responding to the TXS initiated by other TDLS devices.

In the eighth case, the second indication information is set to a fourth parameter value, indicating that the second station does not support the capability of initiating the TXS to the TDLS device and does not support the capability of responding to the TXS initiated by other TDLS devices. For example, when the fourth parameter value is set to 0, it indicates that the device (second station) that sends the TDLS Setup Response frame does not have the capability of initiating the TXS to other TDLS devices and does not have the capability of responding to the TXS initiated by other TDLS devices.

In the step 204, the first station receives the TDLS Setup Response frame sent by the second station.

After receiving the TDLS Setup Response frame, the first station determines the support capability information of the second station for the P2P TXS mode based on the second indication information. The first and second stations successfully establish a TDLS link, and if the first station holds a first TXOP and the second station, as the TXOP responder, needs to transmit the temporary/bursty low-latency service while receiving data from the first station, steps 205 to 207 are respectively executed according to the specific capabilities of the first and second indication information.

In the step 205, the first station sends data to the second station within a first TXOP, the second indication information indicates that the second station does not support a capability of responding to TXS initiated by other TDLS devices, or the first indication information indicates that the first station does not support a capability of initiating TXS to a TDLS device.

The second indication information indicates that the second station does not support the capability of responding to the TXS initiated by other TDLS devices. For example, the second indication information is set to 0 or 2.

Alternatively, the first indication information indicates that the first station does not support the capability of initiating the TXS to the TDLS device, and the second indication information is set to 1.

In any of the above cases, the first station device sends the data to the second station device within the first TXOP, and the second station device continues keeping the receiving state within the first TXOP to receive the data sent by the first station device.

In the step 206, the first station receives a first TXOP sharing request sent by the second station, the first TXOP sharing request is used to request the first station to share part of a transmission time within a first TXOP for the second station to perform low-latency service transmission, the second indication information indicates that the second station supports the capability of responding to the TXS initiated by other TDLS devices, and the first indication information indicates that the first station supports the capability of initiating the TXS to the TDLS device.

The second indication information indicates that the second station supports the capability of responding to the TXS initiated by other TDLS devices, and the first indication information indicates that the first station supports the capability of initiating the TXS to the TDLS device. For example, if the second indication information is set to 1 (or 3) and the first indication information is set to 2 (or 3), then when the second station sends the first TXOP sharing request (e.g., the ACK or BlockAck frame) to the first station within the first TXOP, it requests the first station to share part of the first TXOP for the transmission of the low-latency communication service.

In the step 207, a second TXOP sharing request is sent to the second station, the second TXOP sharing request is used to request the second station to share part of a transmission time within a second TXOP for the first station to perform low-latency service transmission, the first indication information indicates that the first station supports the capability of responding to the TXS initiated by other TDLS devices, and the second indication information indicates that the second station supports the capability of initiating the TXS to the TDLS device.

The first indication information indicates that the first station supports the capability of responding to the TXS initiated by other TDLS devices, and the second indication information indicates that the second station supports the capability of initiating the TXS to the TDLS device. For example, if the first indication information is set to 1 (or 3) and the second indication information is set to 2 (or 3), then when the first station sends the second TXOP sharing request (e.g., the ACK or BlockAck frame) to the second station within the second TXOP (the second station is the TXOP holder), it requests the second station to share part of the second TXOP for the transmission of the low-latency communication service.

In some embodiments, after the step 206, the method further includes:
in step 208, in response to the first TXOP sharing request, the first station sends a first Multi User Request-to-Send Transmission Opportunity Sharing (MU-RTS TXS) Trigger frame to the second station, and the first MU-RTS TXS Trigger frame includes a User Info field, which includes device identity information of the second station.

After receiving the first TXOP sharing request from the second station, the first station sends the MU-RTS TXS Trigger frame to share part of the transmission time of the first TXOP with the second station. The MU-RTS TXS Trigger frame includes the User Info field, which includes an identifier of the target second station.

For example, when the second station is not an affiliated STA of a non-AP MLD, the identifier of the second station can be a Media Access Control (MAC) address of the second station, and when the second station is an affiliated STA of the non-AP MLD, the identifier of the second station is set to a MAC address of a MLD to which the second station is affiliated.

Accordingly, the User Info field of the first MU-RTS TXS Trigger frame includes the device identity information of the second station. During the transmission time indicated by the MU-RTS TXS Trigger frame, low-latency services are transmitted, that is, the identifier in the User Info field matches that of the second station, and the second station uses the transmission time allocated by the first station to transmit its buffered temporary/bursty low-latency communication services; or
the User Info field does not include the device identity information of the second station. Within the first TXOP, the receiving state is kept to receive the data sent by the first station. That is, the identifier in the User Info field does not match that of the second station, and the second station does not respond and remains in the receiving state.

In some embodiments, after the step 207, the method further includes:
in step 209, in response to the second TXOP sharing request, the second station sends a second MU-RTS TXS Trigger frame to the first station, the second MU-RTS TXS Trigger frame includes a User Info field, and the User Info field includes device identity information of the first station.

After receiving the second TXOP sharing request from the first station, the second station sends the MU-RTS TXS Trigger frame to share part of the transmission time of the second TXOP (the TXOP held by the second station) with the first station. The MU-RTS TXS Trigger frame contains the User Info field, which includes an identifier of the target second station.

For example, when the first station is not an affiliated STA of a non-AP MLD, the identifier of the first station can be a MAC address of the first station, and when the first station is an affiliated STA of the non-AP MLD, the identifier of the first station is set to a MAC address of a MLD to which the first station is affiliated.

In some embodiments, within the transmission time shared by the first station to the second station, the first station sends data only if it receives a data transmission request from the second station and responds to the data transmission request.

Within the transmission time shared by the first station to the second station, the first station can send data only when the second station sends data to the first station and requests a response; otherwise, the first station does not send data, for example, the first station sets its Network Allocation Vector (NAV) to a busy state.

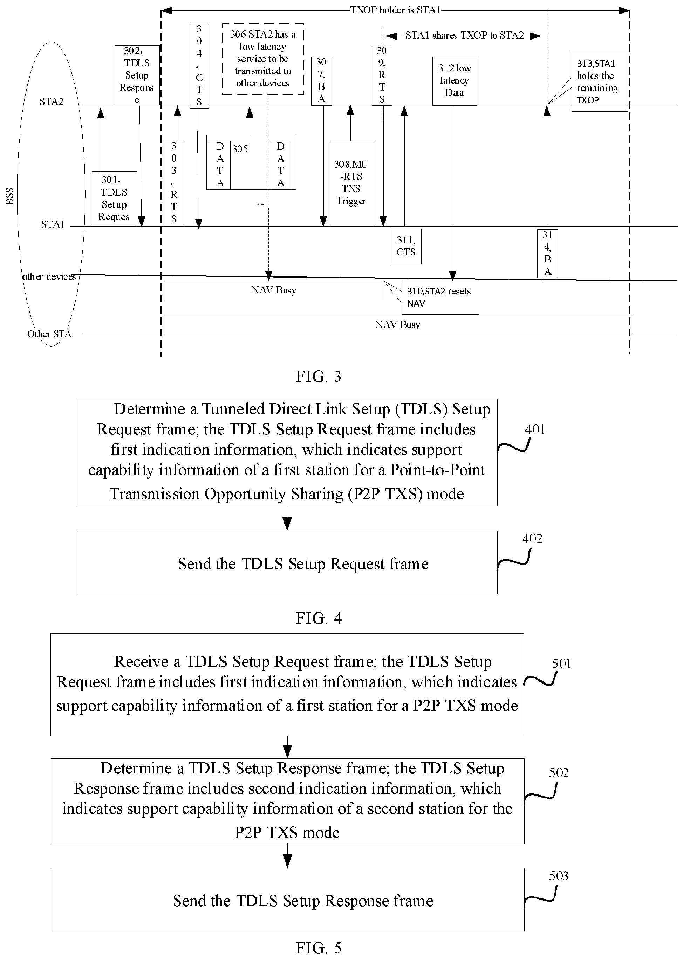

As an example, FIG. 3 shows a specific application process of an embodiment of the present disclosure. Referring to FIG. 3, STA1, which is the first station, serves as the TXOP holder, and STA2 is the second station. In FIG. 3, a case shown in the step 206 is used as an example for illustration, and steps 205 and 207 are similar to it, which will not be described again here.

In step 301, STA1 sends a TDLS Setup Request frame to STA2, and the TDLS Setup Request frame includes first indication information, which indicates support capability information of STA1 for a P2P TXS mode. The first indication information indicates that the first station supports a capability of initiating TXS to a TDLS device.

In step 302, STA2 sends a TDLS Setup Response frame to STA1, and the TDLS Setup Response frame includes second indication information, which indicates support capability information of STA2 for the P2P TXS mode. The second indication information indicates that the second station supports a capability of responding to TXS initiated by other TDLS devices.

In step 303, a first TXOP arrives, and STA1 as the TXOP holder sends an RTS frame to STA2.

In step 304, STA2 as the TXOP Responder replies to STA1 with a CTS frame.

In step 305, a non-low latency service data frame (data) is transmitted between STA1 and STA2.

In step 306, STA2 has a low-latency service to be transmitted to other devices.

For example, the second station has a temporary/bursty low-latency communication service to be transmitted to other communication devices.

In step 307, STA2 sends a first TXOP sharing request (the BA frame in FIG. 3) to STA1, requesting STA1 to share part of the transmission time within the first TXOP for STA2 to perform low-latency service transmission.

In step 308, in response to the first TXOP sharing request, STA1 sends a first MU-RTS TXS Trigger frame to STA2, sharing the transmission time to STA2 through the first MU-RTS TXS Trigger frame.

In step 309, STA2 sends a RTS frame to other devices (receivers of temporary/bursty low-latency communication services, which can be an AP or a STA).

As shown in FIG. 3, at the moment of the step 309 when the first TXOP arrives, other devices set the NAV to a busy state; while in step 310, other devices reset their NAV so as to access the channel to receive the low-latency communication service.

In step 311, other devices reply to STA2 with CTS frames.

In step 312, STA2 transmits a low-latency service data frame (data) with other devices.

In step 313, other devices reply to STA2 with BA frames to confirm the reception of low-latency service data.

STA2 has completed transmitting the low-latency service data with other devices, as shown in the step 313, there may still be a TXOP time remaining in the first TXOP. In this case, the non-low-latency service data frame can continue to be transmitted between STA1 and STA2, which will not be described in detail here by embodiments of the present disclosure.

In some embodiments, the names of information, etc. are not limited to the names described in the embodiments, and terms such as "information", "message", "signal", "signaling", "report", "configuration", "indication", "instruction", "command", "channel", "parameter", "domain", "field", "symbol", "codepoint", "bit", "data", "program", and "chip" can be used interchangeably.

In some embodiments, terms such as "moment", "point in time", "time", "time position", etc. can be used interchangeably, and terms such as "duration", "time period", "time window", "window", "time", etc. can be used interchangeably.

In some embodiments, terms such as wireless access scheme and waveform may be used interchangeably.

In some embodiments, terms such as "certain", "preset", "presetting", "setting", "indicated", "a certain", "any", "first", etc., may be used interchangeably. "Certain A", "preset A", "preset A", "setting A", "indicated A", "a certain A", "any A", "first A" may be interpreted as A predefined in the protocol, or as A obtained through setting, configuration, or indication, or as specific A, certain A, any A, or first A, etc., which is not limited herein.

In some embodiments, the determination or judgment can be performed by a value represented by 1 bit (0 or 1), or by a true or false value (Boolean value) represented by true or false, or by comparison of numerical values (for example, comparison with a predetermined value), but is not limited thereto.

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

The communication method involved in embodiments of the present disclosure may include at least one of the embodiments and the steps. For example, step 201 may be implemented as an independent embodiment, step 202 may be implemented as an independent embodiment, step 203 may be implemented as an independent embodiment, step 204 may be implemented as an independent embodiment, step 205 may be implemented as an independent embodiment, step 206 may be implemented as an independent embodiment, step 207 may be implemented as an independent embodiment, the combination of step 201 and step 202 may be implemented as an independent embodiment, the combination of step 203 and step 204 may be implemented as an independent embodiment, the combination of step 206 and step 208 may be implemented as an independent embodiment, and the combination of step 207 and step 209 may be implemented as an independent embodiment, but is not limited thereto.

In some embodiments, other implementations described before or after the description corresponding to FIG. 2 may be referred to.

FIG. 4 shows a first schematic flowchart of a communication method according to an embodiment of the present disclosure.

As shown in FIG. 4, the above method can be applied to the first station 101, and includes steps 401 and 402.

In the step 401, a Tunneled Direct Link Setup (TDLS) Setup Request frame is determined, the TDLS Setup Request frame includes first indication information, the first indication information indicates support capability information of the first station for a Point-to-Point Transmission Opportunity Sharing (P2P TXS) mode, and the support capability information includes at least one of: whether the first station supports the P2P Transmission Opportunity Sharing (TXS) mode or a type of the P2P TXS mode supported by the first station.

In the step 402, the TDLS Setup Request frame is sent.

For example, in embodiments of the present disclosure, the TDLS Setup Request frame includes an Ultra High Reliability (UHR) Capabilities element; and
the first indication information is carried in a P2P TXOP Sharing Mode Support indication field of the UHR Capabilities element.

For example, in embodiments of the present disclosure, the method includes at least one of:
setting the first indication information as a first parameter value, indicating that the first station supports a capability of initiating the TXS to a TDLS device and supports a capability of responding to the TXS initiated by other TDLS devices;
setting the first indication information as a second parameter value, indicating that the first station supports the capability of initiating the TXS to the TDLS device and does not support the capability of responding to the TXS initiated by other TDLS devices;
setting the first indication information as a third parameter value, indicating that the first station does not support the capability of initiating the TXS to the TDLS device and supports the capability of responding to the TXS initiated by other TDLS devices; or
setting the first indication information as a fourth parameter value, indicating that the first station does not support the capability of initiating the TXS to the TDLS device and does not support the capability of responding to the TXS initiated by other TDLS devices.

For example, in embodiments of the present disclosure, after sending the TDLS Setup Request frame, the method further includes:
in step 403, a TDLS Setup Response frame sent by a second station is received; and
the TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station.

For example, in embodiments of the present disclosure, after receiving the TDLS Setup Response frame sent by the second station, the method further includes:
in step 404, data is sent to the second station within a first TXOP, the second indication information indicates that the second station does not support a capability of responding to TXS initiated by other TDLS devices, or the first indication information indicates that the first station does not support a capability of initiating TXS to a TDLS device;
in step 405, a first TXOP sharing request sent by the second station is received, the first TXOP sharing request is used to request the first station to share part of a transmission time within a first TXOP for the second station to perform low-latency service transmission, the second indication information indicates that the second station supports the capability of responding to the TXS initiated by other TDLS devices, and the first indication information indicates that the first station supports the capability of initiating the TXS to the TDLS device; or
in step 406, a second TXOP sharing request is sent to the second station, the second TXOP sharing request is used to request the second station to share part of a transmission time within a second TXOP for the first station to perform low-latency service transmission, the first indication information indicates that the first station supports the capability of responding to the TXS initiated by other TDLS devices, and the second indication information indicates that the second station supports the capability of initiating the TXS to the TDLS device.

For example, in embodiments of the present disclosure, after receiving the first TXOP sharing request sent by the second station, the method further includes:
in step 407, in response to the first TXOP sharing request, the first station sends a first Multi User Request-to-Send Transmission Opportunity Sharing (MU-RTS TXS) Trigger frame to the second station, the first MU-RTS TXS Trigger frame includes a User Info field, and the User Info field includes device identity information of the second station.

For example, in embodiments of the present disclosure, during the transmission time shared by the first station to the second station, the first station sends data only when receiving and responding to a data transmission request from the second station.

For example, in embodiments of the present disclosure, after sending the second TXOP sharing request to the second station, the method further includes:
in step 408, a second MU-RTS TXS Trigger frame sent by the second station is received, the second MU-RTS TXS Trigger frame includes a User Info field, and the User Info field includes device identity information of the first station.

The communication method involved in embodiments of the present disclosure may include at least one of the embodiments and the steps. For example, step 401 may be implemented as an independent embodiment, step 402 may be implemented as an independent embodiment, step 403 may be implemented as an independent embodiment, step 404 may be implemented as an independent embodiment, step 405 may be implemented as an independent embodiment, step 406 may be implemented as an independent embodiment, the combination of step 401 and step 402 may be implemented as an independent embodiment, the combination of step 402 and step 403 may be implemented as an independent embodiment, the combination of step 405 and step 407 may be implemented as an independent embodiment, and the combination of step 406 and step 408 may be implemented as an independent embodiment, but is not limited thereto.

In some embodiments, other implementations described before or after the description corresponding to FIG. 4 may be referred to.

FIG. 5 shows a second schematic flowchart of a communication method according to an embodiment of the present disclosure.

As shown in FIG. 5, the method can be applied to the second station 102, and the method includes steps 501 to 503.

In the step 501, a TDLS Setup Request frame is received, the TDLS Setup Request frame includes first indication information, the first indication information indicates support capability information of the first station for a P2P TXS mode, and the support capability information includes at least one of: whether the first station supports the P2P Transmission Opportunity Sharing (TXS) mode or a type of the P2P TXS mode supported by the first station.

In the step 502, a TDLS Setup Response frame is determined, the TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station.

In the step 503, the TDLS Setup Response frame is sent.

For example, in embodiments of the present disclosure, the TDLS Setup Request frame includes a UHR Capabilities element; and
the second indication information is carried in a P2P TXOP Sharing Mode Support indication field of the UHR Capabilities element.

For example, in embodiments of the present disclosure, the method includes at least one of:
setting the second indication information as a first parameter value, indicating that the second station supports a capability of initiating the TXS to a TDLS device and supports a capability of responding to the TXS initiated by other TDLS devices;
setting the second indication information as a second parameter value, indicating that the second station supports the capability of initiating the TXS to the TDLS device and does not support the capability of responding to the TXS initiated by other TDLS devices;
setting the second indication information as a third parameter value, indicating that the second station does not support the capability of initiating the TXS to the TDLS device and supports the capability of responding to the TXS initiated by other TDLS devices; or
setting the second indication information as a fourth parameter value, indicating that the second station does not support the capability of initiating the TXS to the TDLS device and does not support the capability of responding to the TXS initiated by other TDLS devices.

For example, in embodiments of the present disclosure, after receiving the TDLS Setup Request frame, the method further includes:
in step 504, a receiving state is kept within a first TXOP, and data sent by the first station is received, the second indication information indicates that the second station does not support a capability of responding to TXS initiated by other TDLS devices, or the first indication information indicates that the first station does not support a capability of initiating TXS to a TDLS device;
in step 505, a TXOP sharing request is sent to the first station, the TXOP sharing request is used to request the first station to share part of a transmission time within a first TXOP for the second station to perform low-latency service transmission, the second indication information indicates that the second station supports the capability of responding to the TXS initiated by other TDLS devices, and the first indication information indicates that the first station supports the capability of initiating the TXS to the TDLS device; or
in step 506, a second TXOP sharing request sent by the first station is received, the second TXOP sharing request is used to request the second station to share part of a transmission time within a second TXOP for the first station to perform low-latency service transmission, the first indication information indicates that the first station supports the capability of responding to the TXS initiated by other TDLS devices, and the second indication information indicates that the second station supports the capability of initiating the TXS to the TDLS device.

For example, in embodiments of the present disclosure, after sending the TXOP sharing request to the first station, the method further includes:
in step 507, a first MU-RTS TXS Trigger frame sent by the first station to the second station is received, and the first MU-RTS TXS Trigger frame includes a User Info field.

For example, in embodiments of the present disclosure, the User Info field includes device identity information of the second station, and a low-latency service is transmitted within a transmission time indicated by the MU-RTS TXS Trigger frame; or
the User Info field does not include the device identity information of the second station, a receiving state is kept within the first TXOP and data sent by the first station is received.

For example, in embodiments of the present disclosure, after the second TXOP sharing request is sent to the second station, the method further includes:
in step 508, in response to the second TXOP sharing request, a second MU-RTS TXS Trigger frame is sent to the first station, the second MU-RTS TXS Trigger frame includes a User Info field, and the User Info field includes device identity information of the first station.

For example, in embodiments of the present disclosure, during a transmission time shared by the second station to the first station, the second station sends data only when receiving and responding to a data transmission request from the first station.

The communication method involved in embodiments of the present disclosure may include at least one of the embodiments and the steps. For example, step 501 may be implemented as an independent embodiment, step 502 may be implemented as an independent embodiment, step 503 may be implemented as an independent embodiment, step 504 may be implemented as an independent embodiment, step 505 may be implemented as an independent embodiment, step 506 may be implemented as an independent embodiment, the combination of step 501 and step 502 may be implemented as an independent embodiment, the combination of step 502 and step 503 may be implemented as an independent embodiment, the combination of steps 501, 502 and 503 may be implemented as an independent embodiment, the combination of step 505 and step 507 may be implemented as an independent embodiment, and the combination of step 506 and step 508 may be implemented as an independent embodiment, but is not limited thereto.

In some embodiments, other implementations described before or after the description corresponding to FIG. 5 may be referred to.

Embodiments of the present disclosure further provide an apparatus for implementing any of the above methods. For example, an apparatus is provided, and the apparatus includes units or modules for implementing the steps performed by the terminal in any of the above methods. Alternatively, another apparatus is provided, including units or modules for implementing the steps performed by a network device (e.g., access network device, core network functional node, core network device, etc.) in any of the above methods.

It should be understood that the division of units or modules in the above device is only a logical functional division. In actual implementations, they may be completely or partially integrated into a single physical entity, or they may be physically separated. Furthermore, the units or modules in the device may be implemented in the form of a processor invoking software, for example, the device includes a processor connected to a memory storing an instruction, and the processor invokes the instruction stored in the memory to implement any of the above methods or to implement the functions of the units or modules of the device. The processor is, for example, a general-purpose processor, such as a central processing unit (CPU) or a microprocessor, and the memory is either internal or external to the device. Alternatively, the units or modules in the device may be implemented in the form of hardware circuits. The functions of some or all of the units or modules may be implemented through the design of the hardware circuits, where the hardware circuits may be understood as one or more processors. For example, in one implementation, the hardware circuit is an application-specific integrated circuit (ASIC), and the functions of some or all of the units or modules are implemented through the design of the logical relationships between the components within the circuit. In another implementation, for example, the hardware circuit described above may be implemented by using a programmable logic device (PLD), such as a field programmable gate array (FPGA), which may include a large number of logic gate circuits. The connection relationships between the logic gate circuits are configured through a configuration file, thereby implementing the functions of some or all of the units or modules described above. All units or modules of the above device may be implemented entirely by a processor invoking software, or entirely by hardware circuits, or partially by a processor invoking software and the rest by hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as an ASIC, such as a neural network processing unit (NPU), a tensor processing unit (TPU), a deep learning processing unit (DPU), etc.

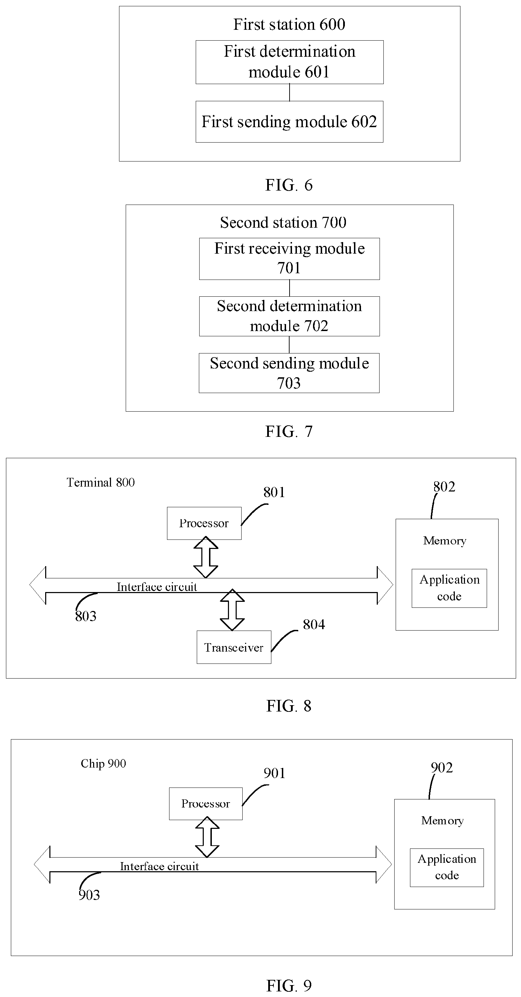

FIG. 6 is a schematic structural diagram of a first station provided in an embodiment of the present disclosure. As shown in FIG. 6, the first station 600 may include at least one of a determination module 601, a first sending module 602, etc.

In some embodiments, the determination module 601 is configured to determine a Tunneled Direct Link Setup (TDLS) Setup Request frame, the TDLS Setup Request frame includes first indication information, the first indication information indicates support capability information of the first station for a P2P TXS mode, and the support capability information includes at least one of: whether the first station supports the P2P Transmission Opportunity Sharing (TXS) mode or a type of the P2P TXS mode supported by the first station.

The first sending module 602 is configured to send the TDLS Setup Request frame.

In some embodiments, the determination module 601 is configured to perform at least one of the communication steps (e.g., steps 201, 301 and 401, but not limited thereto) performed by the first station 101 in any of the above methods, which will not be described in detail here. The first sending module 602 is configured to perform at least one of the communication steps (e.g., steps 202, 205, 207, 303, 308, 402, 404, 406, and 407, but not limited thereto) performed by the first station 101 in any of the above methods, which will not be described in detail here.

FIG. 7 is a schematic structural diagram of a second station provided in an embodiment of the present disclosure. As shown in FIG. 7, the second station 700 may include: a first receiving module 701, a second determination module 702, and a second sending module 703.

In some embodiments, the first receiving module 701 is configured to receive a TDLS Setup Request frame, the TDLS Setup Request frame includes first indication information, the first indication information indicates support capability information of the first station for a P2P TXS mode, and the support capability information includes at least one of: whether the first station supports the P2P Transmission Opportunity Sharing (TXS) mode or a type of the P2P TXS mode supported by the first station.

The second determination module 702 is configured to determine a TDLS Setup Response frame, the TDLS Setup Response frame includes second indication information, the second indication information indicates support capability information of the second station for the P2P TXS mode, and the support capability information includes at least one of: whether the second station supports the P2P Transmission Opportunity Sharing (TXS) mode or a type of the P2P TXS mode supported by the second station.

The second sending module 703 is configured to send the TDLS Setup Response frame.

In some embodiments, the first receiving module 701 is configured to perform at least one of the communication steps (e.g., steps 203, 501, 504, 506, 507, but not limited thereto) performed by the second station 102 in any of the above methods, the second determination module 702 is configured to perform at least one of the communication steps (e.g., step 502, but not limited thereto) performed by the second station 102 in any of the above methods, and the second sending module 703 is configured to perform at least one of the communication steps (e.g., steps 203, 209, 302, 304, 307, 309, 505, 508, but not limited thereto) performed by the second station 102 in any of the above methods, which will not be described in detail here.

FIG. 8 is a schematic structural diagram of a terminal 800 (e.g., a user equipment) provided in an embodiment of the present disclosure. The terminal 800 may be a chip, chip system, or processor that supports network devices in implementing any of the above methods, or it may be a chip, chip system, or processor that supports a terminal in implementing any of the above methods. The terminal 800 can be configured to implement the methods described in the above method embodiments, and reference can be made to the descriptions in the above method embodiments for details.

As shown in FIG. 8, the terminal 800 includes one or more processors 801. The processor 801 may be a general-purpose processor or a dedicated processor, such as a baseband processor or a central processing unit (CPU). The baseband processor may be configured to process communication protocols and communication data. The CPU may be configured to control a communication device (e.g., a base station, a baseband chip, a terminal device, a terminal device chip, a DU or a CU, etc.), execute programs, and process program data. The terminal 800 is configured to perform any of the above methods.

In some embodiments, the terminal 800 further includes one or more memories 802 for storing instructions. In some embodiments, all or a part of the memory 801 may be located external to the terminal 800.

In some embodiments, the terminal 800 further includes one or more transceivers 804. When the terminal 800 includes one or more transceivers 804, the transceiver 804 performs at least one of the communication steps such as sending and/or receiving in the above methods (e.g., steps 202, 203, 204, 205, 206, 207, 208, 209, steps 301 to 313, steps 402, 403, 404, 405, 406, 407, 408, steps 501, 503, 505, 505, 506, 507, 508, but not limited thereto), and the processor 801 performs at least one of other steps (e.g., steps 201, 401, 301, and 502, but not limited thereto).

In some embodiments, the transceiver can include a receiver and/or a sender, which may be separated or integrated. Alternatively, terms such as the transceiver, the transceiver unit, the transceiver machine, and the transceiver circuit are interchangeable; terms such as the sender, the sending unit, the sender machine, and the sending circuit are interchangeable; and terms such as the receiver, the receiving unit, the receiver machine, and the receiving circuit are interchangeable.

In some embodiments, the terminal 800 may further include one or more interface circuits 803. In some embodiments, the interface circuit 803 is connected to the memory 801 and may be configured to receive signals from the memory 801 or other devices, and may be configured to send signals to the memory 801 or other devices. For example, the interface circuit 803 may read instructions stored in the memory 801 and send the instructions to the processor 801.

The terminal 800 described in the above embodiments may be a communication device such as UE, but the scope of the terminal 800 described in the present disclosure is not limited thereto, and the structure of the terminal 800 may not be limited to FIG. 8. The communication device may be an independent device or a part of a larger device. For example, the communication device may be: (1) an independent integrated circuit (IC), or a chip, or a chip system or subsystem; (2) a collection of one or more ICs, In some embodiments, the above IC collection may further include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

FIG. 9 is a schematic structural diagram of a chip 900 provided in an embodiment of the present disclosure. If the terminal 800 can be a chip or a chip system, reference can be made to the schematic structural diagram of the chip 900 shown in FIG. 9, but it is not limited thereto.

The chip 900 includes one or more processors 901, and the chip 900 is configured to perform any of the above methods.

In some embodiments, the chip 900 further includes one or more interface circuits 903. In some embodiments, the interface circuit 903 is connected to a memory 902, and may be configured to receive signals from the memory 902 or other devices, and may be configured to send signals to the memory 902 or other devices. For example, the interface circuit 903 may read instructions stored in the memory 902 and send the instructions to the processor 901.

In some embodiments, the interface circuit 903 performs at least one of the communication steps such as sending and/or receiving in the above method (e.g., steps 202, 203, 204, 205, 206, 207, 208, 209, steps 301 to 313, steps 402, 403, 404, 405, 406, 407, 408, steps 501, 503, 505, 505, 506, 507, 508, but not limited thereto), and the processor 901 performs at least one of other steps (e.g., steps 201, 401, 301, 502, but not limited thereto).

In some embodiments, the terms interface circuit, interface, transceiving pin, transceiver, etc., can be used interchangeably.

In some embodiments, the chip 900 further includes one or more memories 902 for storing instructions. In some embodiments, all or part of the memories 902 may be located outside of the chip 900.

The present disclosure also provides a storage medium. The storage medium described above stores an instruction. The instruction, when run on the terminal 800, causes the terminal 800 to perform any of the above methods. In some embodiments, the storage medium described above is an electronic storage medium. In some embodiments, the storage medium described above is a computer-readable storage medium, but is not limited thereto. The storage medium may also be a storage medium readable by other devices. In some embodiments, the storage medium described above may be a non-transitory storage medium, but is not limited thereto. The storage medium described above may also be a transient storage medium.

The present disclosure also provides a program product that, when executed by the terminal 800, causes the terminal 800 to perform any of the above methods. In some embodiments, the program product is a computer program product.

The present disclosure also provides a computer program that, when executed on a computer, causes the computer to perform any of the above methods.

## Claims

1. A communication method, applied to a first station, comprising:
determining a Tunneled Direct Link Setup (TDLS) Setup Request frame, wherein the TDLS Setup Request frame comprises first indication information, the first indication information indicates support capability information of the first station for a Point-to-Point Transmission Opportunity Sharing (P2P TXS) mode, and the support capability information comprises at least one of whether the first station supports the P2P TXS mode or a type of the P2P TXS mode supported by the first station; and
sending the TDLS Setup Request frame.

2. The communication method according to claim 1, wherein the TDLS Setup Request frame comprises an Ultra High Reliability (UHR) Capabilities element; and
the first indication information is carried in a P2P TXOP Sharing Mode Support indication field of the UHR Capabilities element.

3. The communication method according to claim 1 or 2, wherein the method comprises at least one of:
setting the first indication information as a first parameter value, indicating that the first station supports a capability of initiating TXS to a TDLS device and supports a capability of responding to TXS initiated by another TDLS device;
setting the first indication information as a second parameter value, indicating that the first station supports the capability of initiating the TXS to the TDLS device and does not support the capability of responding to the TXS initiated by another TDLS device;
setting the first indication information as a third parameter value, indicating that the first station does not support the capability of initiating the TXS to the TDLS device and supports the capability of responding to the TXS initiated by another TDLS device; or
setting the first indication information as a fourth parameter value, indicating that the first station does not support the capability of initiating the TXS to the TDLS device and does not support the capability of responding to the TXS initiated by another TDLS device.

4. The communication method according to claim 1, wherein after sending the TDLS Setup Request frame, the method further comprises:
receiving a TDLS Setup Response frame sent by a second station;
wherein the TDLS Setup Response frame comprises second indication information, the second indication information indicates support capability information of the second station for the P2P TXS mode, and the support capability information comprises at least one of whether the second station supports the P2P TXS mode or a type of the P2P TXS mode supported by the second station.

5. The communication method according to claim 4, wherein after receiving the TDLS Setup Response frame sent by the second station, the method further comprises:
sending data to the second station within a first TXOP, wherein the second indication information indicates that the second station does not support a capability of responding to TXS initiated by another TDLS device, or the first indication information indicates that the first station does not support a capability of initiating TXS to a TDLS device;
receiving a first TXOP sharing request sent by the second station, wherein the first TXOP sharing request is configured to request the first station to share part of a transmission time within the first TXOP for the second station to perform low-latency service transmission, the second indication information indicates that the second station supports the capability of responding to the TXS initiated by another TDLS device, and the first indication information indicates that the first station supports the capability of initiating the TXS to the TDLS device; or
sending a second TXOP sharing request to the second station, wherein the second TXOP sharing request is configured to request the second station to share part of a transmission time within a second TXOP for the first station to perform low-latency service transmission, the first indication information indicates that the first station supports the capability of responding to the TXS initiated by another TDLS device, and the second indication information indicates that the second station supports the capability of initiating the TXS to the TDLS device.

6. The communication method according to claim 5, wherein after receiving the first TXOP sharing request sent by the second station, the method further comprises:
in response to the first TXOP sharing request, sending, by the first station, a first Multi User Request-to-Send Transmission Opportunity Sharing (MU-RTS TXS) Trigger frame to the second station, wherein the first MU-RTS TXS Trigger frame comprises a User Info field, and the User Info field comprises device identity information of the second station.

7. The communication method according to claim 5 or 6, wherein during a transmission time shared by the first station to the second station, data is sent by the first station only when receiving and responding to a data transmission request from the second station.

8. The communication method according to claim 5, wherein after sending the second TXOP sharing request to the second station, the method further comprises:
receiving a second MU-RTS TXS Trigger frame sent by the second station, wherein the second MU-RTS TXS Trigger frame comprises a User Info field, and the User Info field comprises device identity information of the first station.

9. A communication method, applied to a second station device, comprising:
receiving a TDLS Setup Request frame, wherein the TDLS Setup Request frame comprises first indication information, the first indication information indicates support capability information of a first station for a P2P TXS mode, and the support capability information comprises at least one of whether the first station supports the P2P TXS mode or a type of the P2P TXS mode supported by the first station;
determining a TDLS Setup Response frame, wherein the TDLS Setup Response frame comprises second indication information, the second indication information indicates support capability information of the second station for the P2P TXS mode, and the support capability information comprises at least one of whether the second station supports the P2P TXS mode or a type of the P2P TXS mode supported by the second station; and
sending the TDLS Setup Response frame.

10. The communication method according to claim 9, wherein the TDLS Setup Request frame comprises a UHR Capabilities element; and
the second indication information is carried in a P2P TXOP Sharing Mode Support indication field of the UHR Capabilities element.

11. The communication method according to claim 9 or 10, wherein the method comprises at least one of:
setting the second indication information as a first parameter value, indicating that the second station supports a capability of initiating TXS to a TDLS device and supports a capability of responding to TXS initiated by another TDLS device;
setting the second indication information as a second parameter value, indicating that the second station supports the capability of initiating the TXS to the TDLS device and does not support the capability of responding to the TXS initiated by another TDLS device;
setting the second indication information as a third parameter value, indicating that the second station does not support the capability of initiating the TXS to the TDLS device and supports the capability of responding to the TXS initiated by another TDLS device; or
setting the second indication information as a fourth parameter value, indicating that the second station does not support the capability of initiating the TXS to the TDLS device and does not support the capability of responding to the TXS initiated by another TDLS device.

12. The communication method according to claim 9, wherein after receiving the TDLS Setup Request frame, the method further comprises:
keeping a receiving state within a first TXOP, and receiving data sent by the first station, wherein the second indication information indicates that the second station does not support a capability of responding to TXS initiated by another TDLS device, or the first indication information indicates that the first station does not support a capability of initiating TXS to a TDLS device;
sending a TXOP sharing request to the first station, wherein the TXOP sharing request is configured to request the first station to share part of a transmission time within the first TXOP for the second station to perform low-latency service transmission, the second indication information indicates that the second station supports the capability of responding to the TXS initiated by another TDLS device, and the first indication information indicates that the first station supports the capability of initiating the TXS to the TDLS device; or
receiving a second TXOP sharing request sent by the first station, wherein the second TXOP sharing request is configured to request the second station to share part of a transmission time within a second TXOP for the first station to perform low-latency service transmission, the first indication information indicates that the first station supports the capability of responding to the TXS initiated by another TDLS device, and the second indication information indicates that the second station supports the capability of initiating the TXS to the TDLS device.

13. The communication method according to claim 12, wherein after sending the TXOP sharing request to the first station, the method further comprises:
receiving a first MU-RTS TXS Trigger frame sent by the first station to the second station, wherein the first MU-RTS TXS Trigger frame comprises a User Info field.

14. The communication method according to claim 13, wherein the User Info field comprises device identity information of the second station, and a low-latency service is transmitted within a transmission time indicated by the MU-RTS TXS Trigger frame; or
the User Info field does not comprise the device identity information of the second station, the receiving state is kept within the first TXOP and the data sent by the first station is received.

15. The communication method according to claim 12, wherein after receiving the second TXOP sharing request sent by the first station, the method further comprises:
in response to the second TXOP sharing request, sending a second MU-RTS TXS Trigger frame to the first station, wherein the second MU-RTS TXS Trigger frame comprises a User Info field, and the User Info field comprises device identity information of the first station.

16. The communication method according to claim 12 or 15, wherein during a transmission time shared by the second station to the first station, data is sent by the second station only when receiving and responding to a data transmission request from the first station.

17. A station, wherein the station is a first station, and the first station comprises:
a first determination module, configured to determine a Tunneled Direct Link Setup (TDLS) Setup Request frame, wherein the TDLS Setup Request frame comprises first indication information, the first indication information indicates support capability information of the first station for a Point-to-Point Transmission Opportunity Sharing (P2P TXS) mode, and the support capability information comprises at least one of whether the first station supports the P2P TXS mode or a type of the P2P TXS mode supported by the first station; and
a first sending module, configured to send the TDLS Setup Request frame.

18. A station, wherein the station is a second station, and the second station comprises:
a first receiving module, configured to receive a TDLS Setup Request frame, wherein the TDLS Setup Request frame comprises first indication information, the first indication information indicates support capability information of a first station for a P2P TXS mode, and the support capability information comprises at least one of whether the first station supports the P2P TXS mode or a type of the P2P TXS mode supported by the first station;
a second determination module, configured to determine a TDLS Setup Response frame, wherein the TDLS Setup Response frame comprises second indication information, the second indication information indicates support capability information of the second station for the P2P TXS mode, and the support capability information comprises at least one of whether the second station supports the P2P TXS mode or a type of the P2P TXS mode supported by the second station; and
a second sending module, configured to send the TDLS Setup Response frame.

19. A station, wherein the station is a first station, comprising:
one or more processors;
wherein the first station is configured to perform the communication method according to any one of claims 1 to 8.

20. A station, wherein the station is a second station, comprising:
one or more processors;
wherein the second station is configured to perform the communication method according to any one of claims 9 to 16.

21. A communication system, comprising a first station and a second station, wherein the first station is configured to implement the communication method according to any one of claims 1 to 8, and the second station is configured to implement the communication method according to any one of claims 9 to16.

22. A storage medium having instructions stored thereon, wherein the instructions, when running on a communication device, cause the communication device to perform the communication method according to any one of claims 1 to 8 or the communication method according to any one of claims 9 to 16.
